# EUROPÄISCHE PATENTSCHRIFT

(11) **EP 0 956 525 B1**
(45) Veröffentlichungstag und Bekanntmachung des Hinweises auf die Patenterteilung: **05.09.2001**
(21) Anmeldenummer: 98905367.3
(22) Anmeldetag: 29.01.1998
(51) Int. Cl.: G06F 3/02, G06K 11/18

(54) **UNTERLAGE FÜR COMPUTER-ZEIGEGERÄTE**
SUPPORT FOR COMPUTER POINTING DEVICES
APPUI POUR APPAREILS DE POINTAGE D'ORDINATEUR

(30) Priorität: 29.01.1997 DE 19703125; 29.01.1997 DE 29712146 U
(43) Veröffentlichungstag der Anmeldung: 17.11.1999
(73) Patentinhaber: SCHMIDT, Anita, 50679 Köln (DE)
(72) Erfinder: SCHMIDT, Peter, D-51107 Köln (DE)
(74) Vertreter: Feldkamp, Rainer, Dipl.-Ing.
(86) Internationale Anmeldenummer: EP9800475
(87) Internationale Veröffentlichungsnummer: WO9833109

(56) Entgegenhaltungen:
- EP-A- 0 729 720
- WO-A-86/06920
- US-A- 5 193 523
- PATENT ABSTRACTS OF JAPAN vol. 096, no. 007, 31.Juli 1996 & JP 08 083674 A (DOWA MINING CO LTD), 26.März 1996,

## Beschreibung

Die vorliegende Erfindung betrifft eine Computer-Bedien- bzw. -Eingabe-Vorrichtung in Form eines Computer-Zeigegeräts, einer Unterlage hierfür oder einer Computer-Tastatur.

Bei dem Computer-Zeigegerät kann es sich beispielsweise um eine Maus oder einen Zeigestift handeln.

Derartige Vorrichtungen werden üblicherweise mit der Hand bedient.

Aus den "Patent Abstracts of Japan, Band 096, Nr. 007, 31.07.96" entsprechend JP 08 083 674 ist bereits ein Touch-Screen bekannt der zur Erzeugung einer gleichmäßigen Flüssig-Kristall-Temperatur eine elektrische Heizung aufweist.

Weiterhin ist es aus dem US-Patent 5,193,523 bereits bekannt, die von einem Computer erzeugte Abwärme über einen Lüfter und einen Luftschlauch zur Erwärmung der Füsse des Computerbenutzers oder der Tastatur zu verwenden.

Der vorliegenden Erfindung liegt demgegenüber die Aufgabe zugrunde eine Computer-Bedie- bzw. -Eingabe-Vorrichtung in Form eines Computer-Zeigegeräts, einer Unterlage hierfür oder eine Computer-Tastatur bereitzustellen, bei der der Bedienungskomfort für die die Vorrichtung bedienende Person weiter erhöht ist.

Diese Aufgabe wird erfindungsgemäß dadurch gelöst, daß das Computer-Zeigegerät oder die Computer-Tastatur zur Erwärmung der die Vorrichtung bedienenden Hand direkt oder indirekt durch ein elektrisches Heizelement erwärmbar ist, wobei die Stromversorgung des elektrischen Heizelementes über eine Abzweigung von der die Vorrichtung mit dem Computer verbindenden Leitung erfolgt.

Vorteilhafte Ausführungsformen und Weiterbildungen der Erfindung ergeben sich aus den Unteransprüchen.

Gemäß einer Ausführungsform der vorliegenden Erfindung ist die Vorrichtung durch ein mit der Hand zu bedienendes Computer-Zeigegerät gebildet, wobei die Erwärmung dieses Computer-Zeigegerätes indirekt über eine für dieses bestimmte Unterlage (zum Beispiel Maus-Pad oder Graphik-Tablett) erfolgt, der das elektrische Heizelement zugeordnet ist.

In diesem Fall kann das elektrische Heizelement auf der Oberseite der Unterlage angeordnet sein, wobei es ebenfalls denkbar -ist, daß das elektrische Heizelement zwischen einer die Oberseite der Unterlage bildenden Schicht und einer die Unterseite der Unterlage bildenden Schicht angeordnet ist.

Gemäß einer anderen Ausführungsform der vorliegenden Erfindung ist die Vorrichtung ebenfalls durch ein mit der Hand zu bedienendes Computer-Zeigegerät gebildet, die Erwärmung dieses Computer-Zeigegerätes erfolgt jedoch direkt durch das diesem zugeordnete elektrische Heizelement.

Gemäß einer weiteren Ausführungsform der vorliegenden Erfindung ist die Vorrichtung durch eine eine Handballen-Auflage aufweisende Tastatur gebildet, wobei zumindest der Handballen-Auflagebereich direkt durch das elektrische Heizelement erwärmt wird.

Das elektrische Heizelement kann beispielsweise durch eine Heizfolie gebildet sein, die im jeweiligen Oberflächenbereich der vorstehend beschriebenen Vorrichtung angeordnet ist.

Die Heizfolie ist dabei vorzugsweise auf den jeweiligen Oberflächenbereich aufgeklebt und/oder zumindest teilweise in diesen eingelassen.

Es ist weiterhin denkbar, daß die Heizfolie eine Metallschicht aufweist, die partiell geätzt ist, um den elektrischen Widerstand der Heizfolie einzustellen.

Es ist weiterhin denkbar, daß das elektrische Heizelement durch ein Heizgeflecht und/oder eine Heizwendel gebildet ist, die im jeweiligen Oberflächenbereich der entsprechenden Vorrichtung aufgedruckt sein kann.

Das Heizgeflecht und/oder die Heizwendel können auch durch flächiges Aufbringen einer Metallschicht und anschließendes partielles Ätzen dieser Metallschicht gebildet sein, wobei der elektrische Widerstand des Heizelementes in diesem Fall durch die Menge des durch Ätzen entfernten Materials einstellbar ist.

Die Erfindung wird im folgenden anhand von Ausführungsbeispielen noch näher erläutert.

In den Zeichnungen zeigen:
Fig. 1 eine erste Ausführungsform der vorliegenden Erfindung, bei der das elektrische Heizelement einer Unterlage für ein Computer-Zeigegerät zugeordnet ist,
Fig. 2 eine zweite Ausführungsform der vorliegenden Erfindung, bei der das elektrische Heizelement ebenfalls einer Unterlage für ein Computer-Zeigegerät zugeordnet ist,
Fig. 3 eine Ausführungsform der vorliegenden Erfindung, bei der das elektrische Heizelement direkt einem Computer-Zeigegerät zugeordnet ist,
Fig. 4 und 5 jeweils eine Ausführungsform der vorliegenden Erfindung, bei der das elektrische Heizelement einer Computer-Tastatur zugeordnet ist.

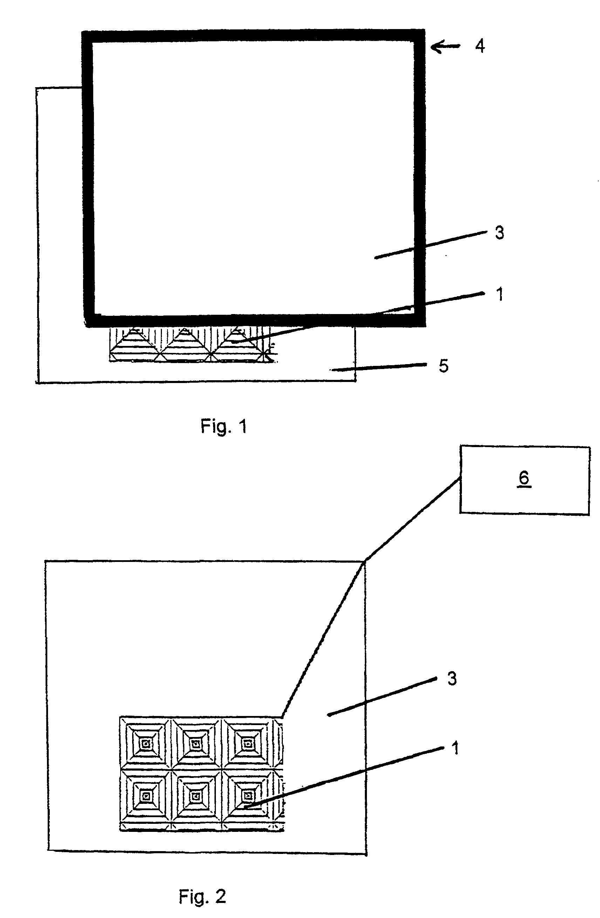

Bei den in den Figuren 1 und 2 gezeigten Ausführungsformen weist die Unterlage ein elektrisches Heizelement in Form einer Heizfolie 1 auf. Bei der Ausführungsform gemäß Figur 1 ist die Heizfolie 1 zwischen einer die Oberseite 3 der Unterlage bildenden Schicht 4 und einer die Unterseite der Unterlage bildenden Schicht 5 angeordnet. Die Schicht 4, die Schicht 5 und die Heizfolie 1 können beispielsweise durch Verkleben zur fertigen Unterlage zusammengefügt werden.

Bei den in den Figuren 1 und 2 dargestellten Ausführungsformen weist die Unterlage das elektrische Heizelement in Form einer Heizfolie 1 auf. Bei der Ausführungsform gemäß Figur 1 ist die Heizfolie 1 zwischen einer die Oberseite 3 der Unterlage bildenden Schicht 4 und einer die Unterseite der Unterlage bildenden Schicht 5 angeordnet. Die Schicht 4, die Schicht 5 und die Heizfolie 1 können beispielsweise durch Verkleben zur fertigen Unterlage zusammengefügt werden.

Die Ausführungsform nach Figur 1 hat den Vorteil, daß die Oberseite 3 der Unterlage wie bei den bekannten Unterlagen ohne Heizelement ausgebildet sein kann.

Bei der Ausführungsform nach Fig. 2 bildet die Heizfolie 1 zumindest teilweise die Oberfläche 3 der Unterlage. Auch in diesem Fall ist eine Befestigung des Heizelementes durch Verkleben denkbar.

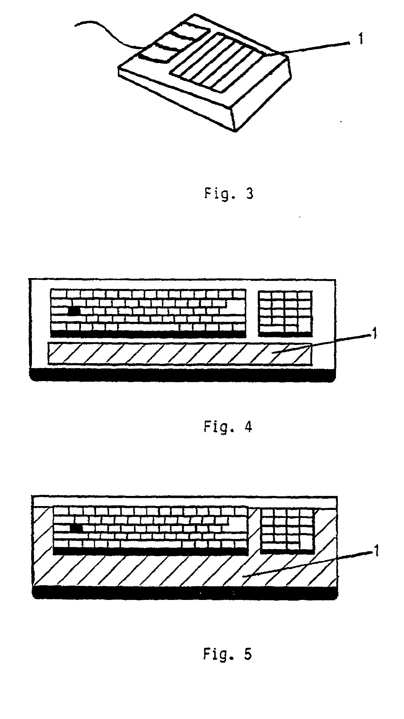

In Fig. 3 ist ein Computer-Zeigegerät in Form einer Maus dargestellt, wobei das vorzugsweise in Form einer Heizfolie vorliegende elektrische Heizelement 1 auf der Oberseite der Maus angeordnet ist.

In den Figuren 4 und 5 ist jeweils eine Computer-Tastatur dargestellt, die eine Handballen-Auflage aufweist.

Bei der Ausführungsform gemäß Fig. 4 ist das elektrische Heizelement 1 lediglich im Bereich dieser Handballen-Auflage vorgesehen, während es bei der Ausführungsform gemäß Fig. 5 zusätzlich noch weitere Teile der Computer-Tastatur-Oberfläche abdeckt bzw. diese bildet und/oder in diese eingelassen ist.

Die Stromversorgung des elektrischen Heizelementes 1 erfolgt jeweils über eine Abzweigung von der die entsprechende Vorrichtung mit dem Computer verbindende Leitung.

Obwohl dies nicht dargestellt ist, kann in allen Fällen zusätzlich zum elektrischen Heizelement und vorzugsweise unter diesem eine wärmereflektierende Folie vorgesehen sein, wodurch zum einen der Wirkungsgrad erhöht wird, während zum anderen eventuell wärmeempfindliche elektrische Bauteile vor einer zu starken Erwärmung geschützt werden.

## Patentansprüche

1. Computer-Bedien- bzw. -Eingabe-Vorrichtung in Form eines Computer-Zeigegeräts, einer Unterlage hierfür oder einer Computertastatur, mit den folgenden Merkmalen:
- die Vorrichtung ist zur Erwärmung der die Vorrichtung bedienenden Hand direkt oder indirekt durch ein elektrisches Heizelement (1) erwärmbar; und
- die Stromversorgung (6) des elektrischen Heizelementes (1) erfolgt über eine Abzweigung von der die Vorrichtung mit dem Computer verbindenden Leitung.

2. Vorrichtung nach Anspruch 1,
**dadurch gekennzeichnet**, daß die Vorrichtung durch ein mit der Hand zu bedienendes Computer-Zeigegerät gebildet ist,
und daß die Erwärmung dieses Computer-Zeigegerätes indirekt über eine für dieses bestimmte Unterlage erfolgt, der das elektrische Heizelement (1) zugeordnet ist.

3. Vorrichtung nach Anspruch 2,
**dadurch gekennzeichnet**, daß das elektrische Heizelement (1) auf der Oberseite (3) der Unterlage angeordnet ist.

4. Vorrichtung nach Anspruch 2,
**dadurch gekennzeichnet**, daß das elektrische Heizelement (1) zwischen einer die Oberseite (3) der Unterlage bildenden Schicht (4) und einer die Unterseite der Unterlage bildenden Schicht (5) angeordnet ist.

5. Vorrichtung nach Anspruch 1,
**dadurch gekennzeichnet**, daß die Vorrichtung durch ein mit der Hand zu bedienendes Computer-Zeigegerät gebildet ist, und
daß die Erwärmung dieses Computer-Zeigegerätes direkt durch das diesem zugeordnete elektrische Heizelement (1) erfolgt.

6. Vorrichtung nach Anspruch 1,
**dadurch gekennzeichnet**, daß die Vorrichtung durch eine eine Handballen-Auflage aufweisende Tastatur gebildet ist, und daß zumindest der Handballen-Auflagebereich direkt durch das elektrische Heizelement (1) erwärmt wird.

7. Vorrichtung nach einem der vorhergehenden Ansprüche,
**dadurch gekennzeichnet**, daß das elektrische Heizelement (1) durch eine Heizfolie gebildet ist, die im jeweiligen Oberflächenbereich der Vorrichtung angeordnet ist.

8. Vorrichtung nach Anspruch 7,
**dadurch gekennzeichnet**, daß die Heizfolie auf den jeweiligen Oberflächenbereich der Vorrichtung aufgeklebt und/oder zumindest teilweise in diesen eingelassen ist.

9. Vorrichtung nach einem der Ansprüche 7 oder 8,
**dadurch gekennzeichnet**, daß die Heizfolie (1) eine Metallschicht aufweist, die partiell geätzt ist, um den elektrische Widerstand der Heizfolie (1) einzustellen.

10. Vorrichtung nach einem der Ansprüche 1 bis 6,
**dadurch gekennzeichnet**, daß das elektrische Heizelement (1) durch ein Heizgeflecht und/oder eine Heizwendel gebildet ist.

11. Vorrichtung nach Anspruch 10,
**dadurch gekennzeichnet**, daß das Heizgeflecht und/oder die Heizwendel aufgedruckt sind.

12. Vorrichtung nach Anspruch 11,
**dadurch gekennzeichnet**, daß das Heizgeflecht und/oder die Heizwendel durch flächiges Aufbringen einer Metallschicht und anschließendes partielles Ätzen dieser Metallschicht gebildet ist, wobei der elektrische Widerstand des Heizelementes durch die Menge des durch Ätzen entfernten Materials einstellbar ist.

## Claims

1. Computer operating or input device in the form of computer pointer device, a base for this or a computer keyboard, with the following features:-
to warm the hand which is operating the device, the device can be directly or indirectly heated up by an electrical heating element (1); and
the power supply (6) to the electrical heating element (1) is effected by a derivation off the lead connecting the device to the computer.

2. Device in accordance with claim 1,
**characterised in that** the device is formed by a hand-operated computer pointer device, and that the this computer pointer device is heated indirectly via a base which is determined for this purpose, and to which the electrical heating element (1) is assigned.

3. Device in accordance with claim 2,
**characterised in that** the electrical heating element (1) is located on the upper face (3) of the base.

4. Device in accordance with claim 2,
**characterised in that** the electrical heating element (1) is located between layer (4) forming the upper face (3) of the base, and a layer (5) forming the underside of the base.

5. Device in accordance with claim 1,
**characterised in that** the device is formed by a hand-operated computer pointer device, and that this computer pointer device is heated directly by means of the electrical heating element (1) which is assigned to this computer pointer device.

6. Device in accordance with claim 1,
**characterised in that** the device is formed by a keyboard which has a wrist support area, and that at least the wrist support area is heated directly by the electrical heating element (1).

7. Device in accordance with one of the preceding claims,
**characterised in that** the electrical heating element (1) is formed by a heating foil which is located in the respective surface area of the device.

8. Device in accordance with claim 7,
**characterised in that** the heating foil is glued onto the respective surface area of the device, and/or at least embedded in it.

9. Device in accordance with one of the claims 7 or 8,
**characterised in that** the heating foil (1) has a metal layer which is partially etched, in order to set the electrical resistance of the heating foil (1).

10. Device in accordance with one of the claims 1 to 6,
**characterised in that** the electrical heating element (1) is formed by a heating braid/and or a heating spiral.

11. Device in accordance with claim 10,
**characterised in that** the heating braid and/or the heating spiral are printed on.

12. Device in accordance with claim 11,
**characterised in that** the heating braid and/or the heating spiral is formed by applying a metal layer over the entire area and partially etching this metal layer, with the electrical resistance of the heating element being adjustable via the amount of material removed by etching.

## Revendications

1. Dispositif pour commander un ordinateur ou y entrer des données ayant la forme d'un dispositif de pointage, d'un support pour ce dernier ou d'un clavier d'ordinateur, présentant les caractéristiques suivantes
- le dispositif peut être chauffé directement ou indirectement par un élément électrique chauffant (1) pour réchauffer la main pilotant le dispositif ; et
- l'élément électrique chauffant (1) est alimenté en courant (6) par une dérivation du câble reliant le dispositif à l'ordinateur.

2. Dispositif selon la revendication 1, **caractérisé en ce que** le dispositif est formé par un dispositif de pointage à manipuler avec la main, et en ce que ce dispositif de pointage est chauffé indirectement par le biais d'un support qui lui est destiné, auquel est associé l'élément électrique chauffant (1).

3. Dispositif selon la revendication 2, **caractérisé en ce que** l'élément électrique chauffant (1) est disposé sur le dessus (3) du support.

4. Dispositif selon la revendication 2, **caractérisé en ce que** l'élément électrique chauffant (1) est disposé entre une couche (4) formant le dessus (3) du support et une couche (5) formant le dessous du support.

5. Dispositif selon la revendication 1, **caractérisé en ce que** le dispositif est formé par un dispositif de pointage à manipuler avec la main, et en ce que ce dispositif de pointage est chauffé directement par le biais de l'élément électrique chauffant (1) qui lui est associé.

6. Dispositif selon la revendication 1, **caractérisé en ce que** le dispositif est formé par un clavier présentant un support pour l'éminence de la main, et en ce qu'au moins le support pour l'éminence de la main est directement chauffé par l'élément électrique chauffant (1).

7. Dispositif selon l'une des revendications précédentes, **caractérisé en ce que** l'élément électrique chauffant (1) est formé par un film chauffant qui est situé à la surface du dispositif.

8. Dispositif selon la revendication 7, **caractérisé en ce que** le film chauffant est collé sur la surface du dispositif et/ou au moins en partie enrobé dans celle-ci.

9. Dispositif selon la revendication 7 ou 8, **caractérisé en ce que** le film chauffant (1) présente une couche métallique partiellement corrodée pour pouvoir régler la résistance électrique du film chauffant (1).

10. Dispositif selon l'une des revendications 1 à 6, **caractérisé en ce que** l'élément électrique chauffant (1) est formé par un treillis chauffant et/ou par un filament chauffant.

11. Dispositif selon la revendication 10, **caractérisé en ce que** le treillis chauffant et/ou le filament chauffant sont imprimés.

12. Dispositif selon la revendication 11, **caractérisé en ce que** le treillis chauffant et/ou le filament chauffant est formé en appliquant à plat une couche de métal, puis en le corrodant partiellement, la résistance électrique de l'élément chauffant pouvant être réglée par la quantité de matière éliminée par corrosion.
